# EUROPÄISCHE PATENTSCHRIFT

(11) **EP 2 918 939 B1**
(45) Veröffentlichungstag und Bekanntmachung des Hinweises auf die Patenterteilung: **06.05.2020**
(21) Anmeldenummer: 15000740.9
(22) Anmeldetag: 12.03.2015
(51) Int. Cl.: B01D 46/00, B01L 1/04, F24F 13/28, B01D 46/24, B08B 15/02, F24F 3/16

(54) **FILTERPATRONE FÜR EINE SICHERHEITSWERKBANK UND SICHERHEITSWERKBANK MIT MINDESTENS EINER FILTERPATRONE**
FILTER CARTRIDGE FOR A SAFETY WORKBENCH AND SAFETY WORKBENCH WITH AT LEAST ONE FILTER CARTRIDGE
CARTOUCHE FILTRANTE POUR UNE HOTTE DE SÉCURITÉ ET HOTTE DE SÉCURITÉ DOTÉE D'AU MOINS UNE CARTOUCHE FILTRANTE

(30) Priorität: 14.03.2014 DE 102014003486
(43) Veröffentlichungstag der Anmeldung: 16.09.2015
(73) Patentinhaber: BERNER INTERNATIONAL GmbH, 25337 Elmshorn (DE)
(72) Erfinder: Hinrichs, Thomas, 25365 Klein Offenseth-Sparrieshoop (DE); Gragert, Sven, 25355 Barmstedt (DE)
(74) Vertreter: Weidner Stern Jeschke

(56) Entgegenhaltungen:
- EP-B1- 1 312 871
- WO-A1-2008/146045
- CA-C- 2 236 517
- GB-A- 2 261 830

## Beschreibung

Die Erfindung betrifft eine Filterpatrone für eine Sicherheitswerkbank gemäß dem Oberbegriff des Anspruchs 1 und eine Sicherheitswerkbank gemäß dem Oberbegriff des Anspruchs 13.

Sicherheitswerkbänke werden unter anderem auf pharmazeutischem und biotechnologischem Gebiet beim Umgang mit Arbeitsstoffen eingesetzt, die ein hohes Gefährdungspotential besitzen. Unter diesen Arbeitsstoffen finden sich infektiöse, cancerogene, mutagene oder fruchtbarkeitsgefährdende Stoffe, darunter auch Gefahrstoffe.

Sicherheitswerkbänke besitzen gewöhnlich an ihrer Vorderseite eine Arbeitsöffnung, durch die eine vor der Sicherheitswerkbank sitzende Bedienungsperson ihre Hände und Unterarme in einen Arbeitsraum der Sicherheitswerkbank einführen kann, in dem sich die Arbeitsstoffe befinden. Vor der Arbeitsöffnung ist eine Glasscheibe angeordnet, die der Bedienungsperson eine gute Sicht auf die Arbeitsstoffe im Innen- oder Arbeitsraum bietet. Um Bedienungspersonen und weitere Personen in der Umgebung der Sicherheitswerkbank vor einem Austritt von Arbeitsstoffen durch die Arbeitsöffnung zu schützen, wird Umgebungsluft durch die Arbeitsöffnung in den Innenraum der Sicherheitswerkbank angesaugt. Die dadurch bewirkte Luftströmung verhindert, dass eventuell kontaminierte Luft aus dem Innenraum in die Umgebung gelangt, und sorgt somit für einen Personenschutz. Zum Produktschutz, d.h. zum Schutz der im Innenraum befindlichen Arbeitsstoffe vor Kontamination durch Mikroorganismen oder andere Verunreinigungen in der zugeführten Umgebungsluft, wird die zugeführte Umgebungsluft vor dem Kontakt mit den Arbeitsstoffen zusammen mit einem Teil der Luft innerhalb der Sicherheitswerkbank mittels eines Gebläses umgewälzt und dabei mit Filtern gereinigt.

Aus der EP 1 312 871 B1 ist bereits eine Sicherheitswerkbank bekannt, bei der die Filter als Patronenfilter ausgebildet und mit mehreren nebeneinander angeordneten Filterpatronen der eingangs genannten Art bestückt sind. Diese Filterpatronen bestehen aus einem hohlzylindrischen Filterkörper, der einen Innenraum der Filterpatrone in radialer Richtung umgibt, einem mit einem oberen Ende des Filterkörpers vergossenen offenen Deckel, der eine in den Innenraum mündende Einströmöffnung umgibt, und einem mit einem unteren Ende des Filterkörpers vergossenen geschlossenen Deckel. Die durch die Arbeitsöffnung angesaugte Umgebungsluft und die in der Sicherheitswerkbank umgewälzte Luft strömen zuerst durch die Einströmöffnung in den Innenraum der Filterpatrone und treten von dort aus durch den Filterkörper bzw. das Filtermaterial hindurch, wobei die Luft gereinigt wird. Bei den Patronenfiltern handelt es sich um so genannte Mikro- oder HEPA-Filter.

Zwar hat sich gezeigt, dass diese Patronenfilter eine sehr gute Filterwirkung besitzen, jedoch wäre es von Vorteil, wenn ohne Beeinträchtigung der Filterwirkung und ohne eine Veränderung am Filterkörper bzw. am Filtermaterial der Volumenstrom durch die Filterpatrone vergrößert und/oder die Druckdifferenz zwischen der Einströmseite und der Ausströmseite verkleinert werden könnte. Dadurch könnte entweder bei gleicher Gebläseleistung mehr Luft durch die Filterpatrone umgewälzt werden, um die Strömungsmenge der durch die Arbeitsöffnung einströmenden Luft zu vergrößern und dadurch sowohl den Personenschutz und den Produktschutz zu verbessern, oder die Gebläseleistung ohne eine Veränderung der Strömungsverhältnisse reduziert und damit Energieeinsparungen erzielt werden.

Die GB 2 261 830 A offenbart bereits eine Filterpatrone gemäß dem Oberbegriff des Anspruchs 1. Der Vorsprung besitzt dort keine strömungstechnische Funktion, sondern ermöglich nur die Befestigung einer Zugstange. Die Anströmfläche des Vorsprungs umfasst an dessen Oberseite eine zur Längsmittelachse der Filterpatrone senkrechte ringförmige Oberfläche und eine von dieser umgebene vertiefte konische Oberfläche, die zusammen mindestens die Hälfte der Anströmfläche bilden. Dies führt bei hohen Strömungsgeschwindigkeiten zu erheblichen Turbulenzen und damit zu einer Abnahme der kinetischen Energie des Luftstroms, wodurch sich bei gleichem Druckgefälle über das Filtermaterial die durch das Filtermaterial strömende Luftmenge verringert. Außerdem nimmt die Strömungsgeschwindigkeit am oberen Ende des Vorsprungs wegen der Reduzierung des Strömungsquerschnitt abrupt zu, so dass sich dort weniger vom Luftstrom mitgeführte Partikel auf der Innenseite des Filterkörpers ablagern, was zu einer ungleichmäßigen Filterwirkung führt.

Ausgehend hiervon liegt der Erfindung die Aufgabe zugrunde, eine Filterpatrone der eingangs genannten Art für einen Einsatz in einer Sicherheitswerkbank dahingehend zu verbessern, dass ohne eine Beeinträchtigung der Filterwirkung und ohne eine Veränderung am Filtermaterial der in Sicherheitswerkbänken verwendeten Filterpatronen die Strömungsmenge der durch den Filterkörper bzw. das Filtermaterial strömenden Luft vergrößert werden kann.

Diese Aufgabe wird erfindungsgemäß durch die Merkmale des Anspruchs 1 gelöst. Bevorzugte Ausführungsformen sind in den abhängigen Ansprüchen definiert.

Die Anströmfläche an der Innenseite des nach innen über den geschlossenen Deckel überstehenden verjüngten Vorsprungs ist koaxial und rotationssymmetrisch zur Längsmittelachse der Filterpatrone und des Filterkörpers, um die Luft nach allen Seiten gleichmäßig umzulenken.

Bei Versuchen bzw. Messungen an einer Filterpatrone für eine Sicherheitswerkbank konnte festgestellt werden, dass sich die Strömungsmenge der durch den Filterkörper strömenden Luft ohne Veränderungen am Filtermaterial sowohl durch Veränderung der geometrischen Form der Einströmöffnung als auch durch Veränderung der geometrischen Form einer von der Luft angeströmten Fläche an der Innenseite des geschlossenen Deckels der Filterpatrone beeinflussen lässt. Weiter wurde bei den Versuchen bzw. Messungen festgestellt, dass sich durch Veränderung der geometrischen Form der Einströmöffnung auch die Druckdifferenz zwischen der Einströmseite und der Ausströmseite der Filterpatrone ohne Veränderungen am Filtermaterial beeinflussen lässt.

Eine Reduzierung der Druckdifferenz zwischen der Einströmseite und der Ausströmseite der Filterpatrone wird vor allem dann erreicht, wenn die Einströmöffnung erfindungsgemäß einen in Richtung des Innenraums abnehmenden düsenartigen Strömungsquerschnitt aufweist, während eine Vergrößerung der Strömungsmenge, d.h. der pro Zeiteinheit durch den Filterkörper strömenden Luftmenge, durch die erfindungsgemäße Abnahme des Strömungsquerschnitts der Einströmöffnung in Richtung des Innenraums und durch den gemäß der Erfindung am geschlossenen Deckel zur Einströmöffnung hin in den Innenraum überstehenden verjüngten Vorsprung erreicht werden kann.

Bei den Versuchen wurde weiter festgestellt, dass bei einer Filterpatrone mit einer erfindungsgemäßen Einströmöffnung deutlich weniger Turbulenzen im Innenraum der Filterpatrone auftreten und dass die Turbulenzen nahezu völlig verschwinden, wenn der geschlossene Deckel durch den überstehenden verjüngten Vorsprung statt mit einer zur Einströmrichtung senkrechten Anströmfläche mit einer zur Strömungsrichtung der einströmenden Luft schräg geneigten Anströmfläche versehen wird, die dafür sorgt, dass die Luft mit weniger Turbulenzen in Richtung der Innenseite der hohlzylindrischen Filterkörpers umgelenkt wird.

Der offene Deckel ist vorzugsweise so ausgebildet, dass der Strömungsquerschnitt der Einströmöffnung bereits außerhalb des Filterkörpers bzw. in Strömungsrichtung der Luft vor dem Erreichen des Filterkörpers abnimmt, so dass die gesamte Länge des Filterkörpers zur Luftfilterung ausgenutzt werden kann, ohne dass die Luft innerhalb des Filterkörpers bzw. hinter der Einströmöffnung wieder entgegen der Einströmrichtung umgelenkt werden muss.

Gemäß einer vorteilhaften Ausgestaltung der Erfindung ist das Verhältnis zwischen dem kleinsten Strömungsquerschnitt an einem inneren Ende der Einströmöffnung und dem größten Strömungsquerschnitt an einem äußeren Ende der Einströmöffnung kleiner als 0,75 und vorzugsweise kleiner als 0,5, so dass die Luft innerhalb der Einströmöffnung wie in einer Düse beschleunigt wird. Es wird angenommen, dass diese Beschleunigung eine der Ursachen für die Vergrößerung des Volumenstroms durch die Filterpatrone ist. Die Reduzierung des Strömungsquerschnitts erfolgt vorteilhaft über eine relativ kurze Strecke, deren Länge zweckmäßig weniger als ein Zehntel der Länge der Filterpatrone beträgt, so dass die düsenartige Einströmöffnung innerhalb des Gehäuses der Sicherheitswerkbank wenig Platz benötigt.

Eine weitere zweckmäßige Ausgestaltung der Erfindung sieht vor, dass die Einströmöffnung an ihrem inneren Ende von einem zur Längsmittelachse der Filterpatrone koaxialen hohlzylindrischen kurzen Steg begrenzt wird, der ein wenig ins Innere des Filterkörpers ragt und eine zum Filterkörper hin offene flache Nut begrenzt, in der das benachbarte Stirnende des Filterkörpers vergossen werden kann. Um das Vergießen des benachbarten Stirnendes des Filterkörpers zu ermöglichen, wird die Nut auch nach außen zu von einem zur Längsmittelachse der Filterpatrone koaxialen Steg begrenzt, der die äußere Umfangsfläche des Filterkörpers an dessen benachbartem Stirnende umgibt.

Zur Montage der Filterpatrone in der Sicherheitswerkbank weist der offene Deckel der Filterpatrone vorteilhaft einen in radialer Richtung der Längsmittelachse über den äußeren Umfang des Filterkörpers überstehenden Randflansch auf. Über die vom Filterkörper abgewandte Seite des Randflanschs steht zweckmäßig ein ringförmiger Vorsprung über, der die Einströmöffnung außerhalb der Filterpatrone umgibt und in radialer Richtung begrenzt. Der Randflansch und der zur Materialeinsparung zweckmäßig hohle ringförmige Vorsprung sind vorteilhaft aus thermoplastischem Kunststoff ausgebildet, um dadurch der Einströmöffnung auf einfache Weise eine gewünschte Kontur zu verleihen. Der offene Deckel kann einstückig oder mehrteilig ausgeführt sein, wobei im zuerst genannten Fall der Randflansch und der Vorsprung bevorzugt integrale Teile des offenen Deckels sind.

Vorzugsweise weist die Einströmöffnung eine zu einer Längsmittelachse der Filterpatrone und des Filterkörpers koaxiale rotationssymmetrische Begrenzungsfläche auf, deren Neigungswinkel in Strömungsrichtung der Luft durch die Einströmöffnung zunimmt.

Vorteilhafterweise ist der Außendurchmesser der Anströmfläche an einem von der Einströmöffnung abgewandten Fuß des Vorsprungs etwas kleiner als der Innendurchmesser des Filterkörpers, so dass ein Teil der Luft am Vorsprung vorbei bis ganz zum Ende des Filterkörpers strömen und so der Filterkörper über seine gesamte Länge zur Luftfilterung ausgenutzt werden kann.

Vorteilhaft sind auch der geschlossene Deckel und der Vorsprung einstückig aus thermoplastischem Kunststoff ausgebildet, wobei der Vorsprung an der Außenseite des geschlossenen Deckels zweckmäßig eine Vertiefung mit einer der Form des Vorsprungs entsprechenden Form begrenzt, so dass der geschlossene Deckel über seinen gesamten Durchmesser möglichst dünnwandig und damit materialsparend ausgebildet werden kann.

Darüber hinaus hat sich bei den Versuchen und Messungen gezeigt, dass im Hinblick auf eine Erhöhung des Luftdurchsatzes bzw. der Strömungsmenge mit relativ niedrigen Vorsprüngen bessere Ergebnisse erzielt werden können, z.B. wenn die Höhe des Vorsprungs weniger als ein Viertel und vorzugsweise weniger als ein Fünftel der axialen Länge des Filterkörpers beträgt.

Um zu vermeiden, dass das zickzackförmig gefaltete und zu einem Hohlzylinder geformte, aus Papier bestehende Filtermaterial bei der Handhabung der Filterpatrone beschädigt werden kann, kann der Filterkörper zwischen dem offenen und dem geschlossenen Deckel zweckmäßig von einem luftdurchlässigen Griffschutz umgeben sein, der bei der Handhabung einen Kontakt mit dem Filterkörper verhindert.

Im Folgenden wird die Erfindung anhand eines in der Zeichnung dargestellten Ausführungsbeispiels näher erläutert.
Fig. 1 zeigt eine schematische, teilweise geschnittene Seitenansicht einer erfindungsgemäßen Sicherheitswerkbank;
Fig. 2 zeigt eine perspektivische Ansicht eines Filtergehäuses der Sicherheitswerkbank mit sechs Filterpatronen;
Fig. 3 zeigt eine vergrößerte Schnittansicht entlang der Linie III - III der Fig. 2;
Fig. 4 zeigt eine vergrößerte perspektivische Ansicht einer erfindungsgemäßen Filterpatrone;
Fig. 5 zeigt eine Oberseitenansicht der Filterpatrone;
Fig. 6 zeigt eine auseinander gezogene perspektivische Ansicht der Teile der Filterpatrone;
Fig. 7 zeigt eine Längsschnittansicht der Filterpatrone entlang der Linie VII-VII der Fig. 5;
Fig. 8 zeigt eine entsprechende Längsschnittansicht einer anderen erfindungsgemäßen Filterpatrone;
Fig. 9 zeigt eine entsprechende Längsschnittansicht einer weiteren erfindungsgemäßen Filterpatrone;
Fig. 10 zeigt eine entsprechende Längsschnittansicht einer nicht zur Erfindung gehörenden Ausführung einer Filterpatrone;
Fig. 11 zeigt eine auseinander gezogene perspektivische Ansicht der Teile einer noch weiteren erfindungsgemäßen Filterpatrone.

Die in der Zeichnung dargestellte, zum Umgang mit cancerogenen, mutagenen oder fruchtbarkeitsgefährdenden bzw. pathogenen Arbeitsstoffen bestimmte Sicherheitswerkbank 10 besteht im Wesentlichen aus einem höhenverstellbaren Unterteil oder Untergestell 12 und einem Oberteil 14 mit einem Gehäuse 16, das einen zur Handhabung der Arbeitsstoffe dienenden Arbeitsraum 18 umgibt.

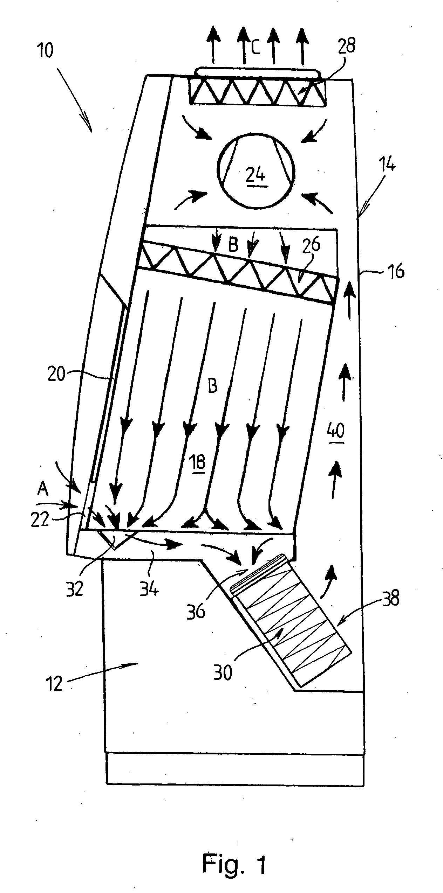

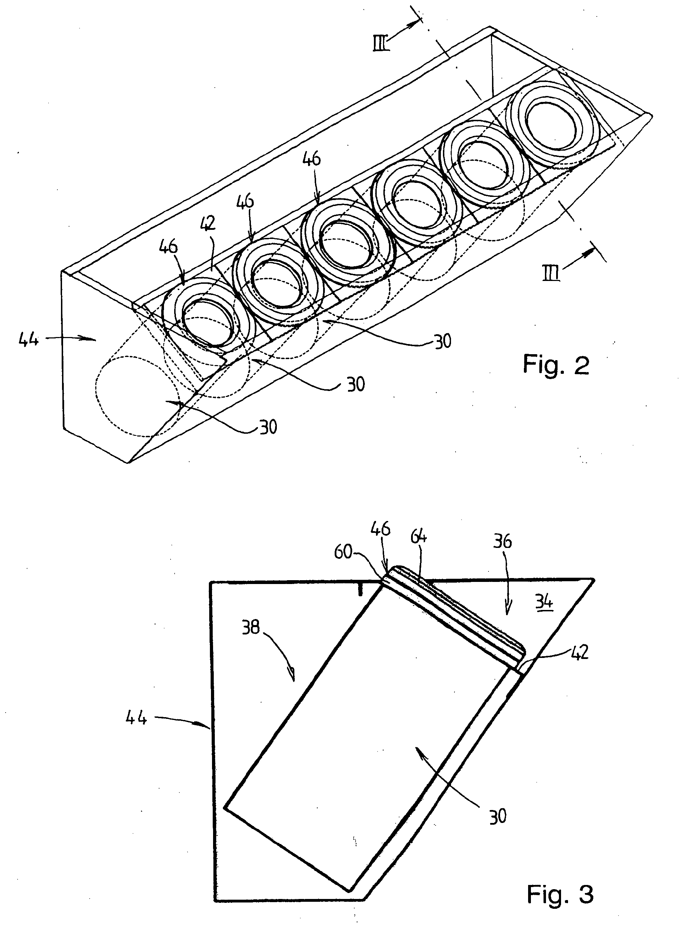

Wie am besten in Fig. 1 und 2 dargestellt, wird der Arbeitsraum 18 an einer Frontseite der Sicherheitswerkbank 10 von einer Glasscheibe 20 begrenzt, die einer vor der Sicherheitswerkbank 10 sitzenden Bedienungsperson (nicht dargestellt) eine gute Sicht in den Arbeitsraum 18 gewährt. Unterhalb von der Glasscheibe 20 befindet sich eine langgestreckte schlitzartige Arbeitsöffnung 22, durch welche die Bedienungsperson zum Umgang mit den Arbeitsstoffen ihre Unterarme und Hände in den Arbeitsraum 18 einführen kann.

Das Oberteil 14 des Gehäuses 16 enthält unter anderem ein Gebläse 24, zwei oberhalb des Arbeitsraums 18 angeordnete HEPA-Filter 26 und 28, sowie sechs unterhalb des Arbeitsraums 18 angeordnete HEPA-Filter 30.

Um zu verhindern, dass die im Arbeitsraum 18 befindlichen Arbeitsstoffe durch die Arbeitsöffnung 22 in die Umgebung austreten, ist an der Unterseite des Arbeitsraums 18 unmittelbar hinter der Arbeitsöffnung 22 eine rinnenförmige Absaugöffnung 32 angeordnet, die sich ebenso wie die Glasscheibe 20 und die Arbeitsöffnung 22 im Wesentlichen über die gesamte Breite der Sicherheitswerkbank 10 erstreckt. Die Absaugöffnung 32 ist ebenso wie weitere, am Boden des Arbeitsraums 18 angeordnete Absaugöffnungen (nicht dargestellt) durch ein Plenum 34 mit der Einlass- oder Rohluftseite 36 der HEPA-Filter 30 verbunden, deren Auslass- oder Reinluftseite 38 durch einen Saugkanal 40 an der Rückseite des Gehäuses 16 mit der Saugseite des Gebläses 24 verbunden ist. Das Gebläse 24 erzeugt durch die Filter 30 einen leichten Unterdruck im Plenum 34, wodurch aus der Umgebung und aus dem Arbeitsraum 18 Luft durch die Arbeitsöffnung 22 in die rinnenförmige Absaugöffnung 32 angesaugt wird, wie durch die Pfeile A in Fig. 1 dargestellt.

Die angesaugte Luft strömt anschließend durch die Filter 30 und den Saugkanal 40 zum Gebläse 24. Von dort wird ein Teil der Luft durch den HEPA-Filter 26 von oben her in den Arbeitsraum 18 geblasen, wo die Luft entlang der Glasscheibe 20 nach unten strömt, wie durch die Pfeile B in Fig. 1 dargestellt. Ein anderer Teil der Luft wird durch eine oberhalb vom Gebläse 24 und vom HEPA-Filter 28 an der Oberseite des Oberteils 14 angeordneten Abluftanschluss 39 aus dem Oberteil 14 der Sicherheitswerkbank 10 abgeführt, wie durch die Pfeile C in Fig. 1 dargestellt.

Wie am besten in Fig. 2 und 3 dargestellt, handelt es sich bei den HEPA-Filtern 30 um Patronenfilter, die nebeneinander in einem im Querschnitt keilförmigen Filtergehäuse 44 angeordnet sind, das sich über die gesamte Breite der Sicherheitswerkbank 10 erstreckt. Das Filtergehäuse 44 wird zum Plenum 34 hin von einer schrägen Zwischenwand 42 mit sechs kreisförmigen Öffnungen begrenzt. In jede der Öffnungen ist von oben her eine austauschbare Filterpatrone 46 eingesetzt, die schräg nach unten in einen mit dem Saugkanal 40 kommunizierenden Innenraum des Filtergehäuse 40 ragt.

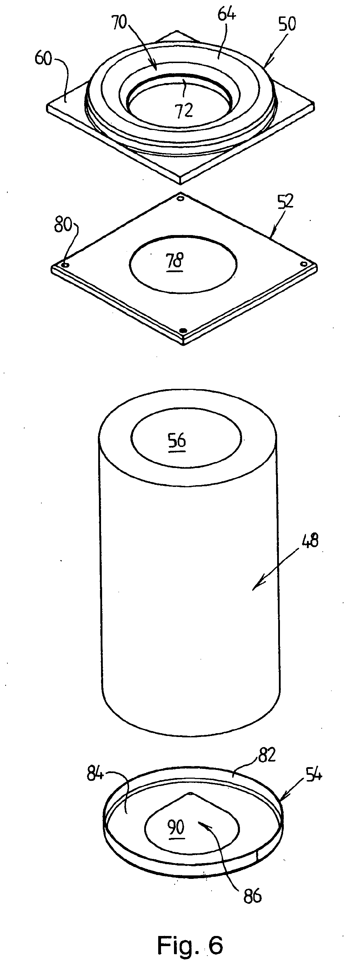

Wie am besten in Fig. 6 dargestellt, besteht jede Filterpatrone 46 aus einem hohlzylindrischen Filterkörper 48, einem am oberen Ende des Filterkörpers 48 befestigten offenen Deckel 50, einem zwischen dem Filterkörper 48 und dem Deckel 50 angeordneten ebenen Dichtungselement 52 und einem am unteren Ende des Filterkörpers 48 befestigten geschlossenen Deckel 54.

Der Filterkörper 48 besteht aus einem zickzackförmig gefalteten Filtermaterial, das zu einem Hohlzylinder geformt ist und einen zylindrischen Innenraum 56 umgibt. Die zur Faltung parallelen Enden des Filtermaterials sind entlang einer Längsklebenaht dicht miteinander verbunden. Die entgegengesetzten Stirnenden des Filterkörpers 48 sind luftdicht mit dem offenen Deckel 50 und dem Dichtungselement 52 einerseits bzw. dem geschlossenen Deckel 54 andererseits vergossen.

Der aus einem thermoplastischen Kunststoff bestehende offene Deckel 50 ist einstückig ausgebildet und ist an seiner dem Filterkörper 48 zugewandten Seite mit einem integrierten Randflansch 60 versehen. Der ebene, zu einer Längsmittelachse 66 der Filterpatrone 46 und des Filterkörpers 48 senkrechte Randflansch 60 besitzt einen quadratischen äußeren Umriss. Über die vom Filterkörper 48 abgewandte Oberseite des Randflanschs 60 steht ein hohler ringförmiger Vorsprung 64 über, der eine zur Längsmittelachse 66 koaxiale Einströmöffnung 70 umgibt. Durch die Einströmöffnung 70 strömt nach der Montage der Filterpatrone 46 im Betrieb der Sicherheitswerkbank 10 die Rohluft aus dem Plenum 34 in den Innenraum 56 des Filterkörpers 48.

Die Einströmöffnung 70 weist eine zur Längsmittelachse 66 koaxiale rotationssymmetrische Begrenzungsfläche auf. Die Begrenzungsfläche besteht aus drei in Strömungsrichtung hintereinander angeordneten Teilflächen. Die erste Teilfläche ist unter einem Winkel von etwa 30 Grad und die zweite Teilfläche unter einem Winkel von etwa 45 Grad zu einer zum Randflansch 60 parallelen Ebene geneigt, so dass der Neigungswinkel der Teilflächen in Strömungsrichtung der Luft durch die Einströmöffnung 70 zunimmt.

Wie am besten in Fig. 2, 3 und 4 dargestellt, liegen der Randflansch 60 bzw. das unter dem Randflansch 60 angeordnete ebene Dichtungselement 52 nach der Montage der Filterpatrone 46 von oben her gegen die ebene Zwischenwand 42 an. Zur Befestigung und Abdichtung der Filterpatrone 46 wird der Randflansch 60 mit vier das Dichtungselement 52 durchsetzenden Schrauben (nicht dargestellt) von oben an der Zwischenwand 24 festgeschraubt. Zu diesem Zweck weist das Dichtungselement 52 in seinen vier Ecken jeweils eine Durchtrittsöffnung 80 für eine der Befestigungsschrauben des Randflanschs 60 auf.

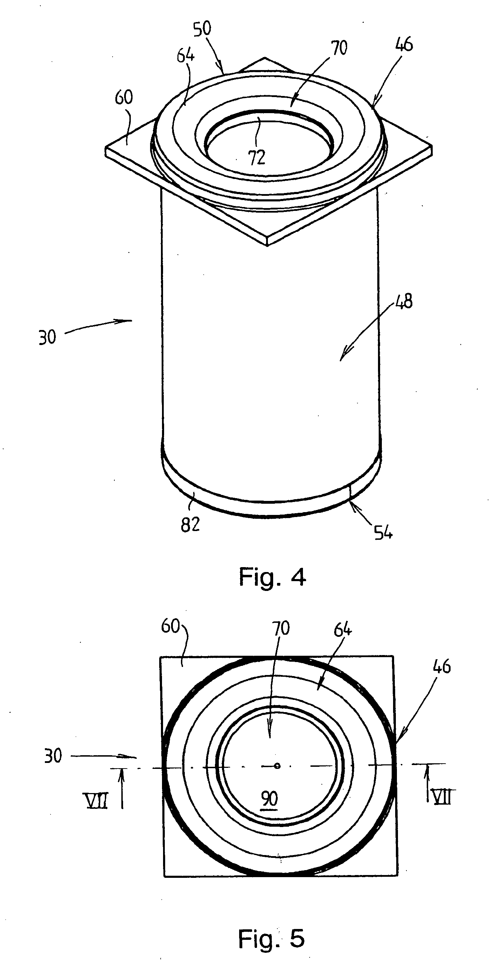

Wie am besten in Fig. 4, 6 und 7 dargestellt, besitzt die vom Vorsprung 64 begrenzte Einströmöffnung 70 einen zum Innenraum 56 hin abnehmenden Strömungsquerschnitt, so dass die Rohluft beim Eintritt in die Filterpatrone 46 beschleunigt wird, während sie die Einströmöffnung 70 passiert. Die Höhe des Vorsprungs 64 und damit die Länge der verjüngten düsenartigen Einströmöffnung 70 beträgt weniger als ein Zehntel der Länge der Filterpatrone 46 und ist damit relativ klein. Der Strömungsquerschnitt am oberen oder äußeren Ende der verjüngten Einströmöffnung 70 ist mehr als doppelt so groß wie der kleinste Strömungsquerschnitt am unteren oder inneren Ende der Einströmöffnung 70, so dass die einströmende Luft über eine kurze Distanz stark beschleunigt wird.

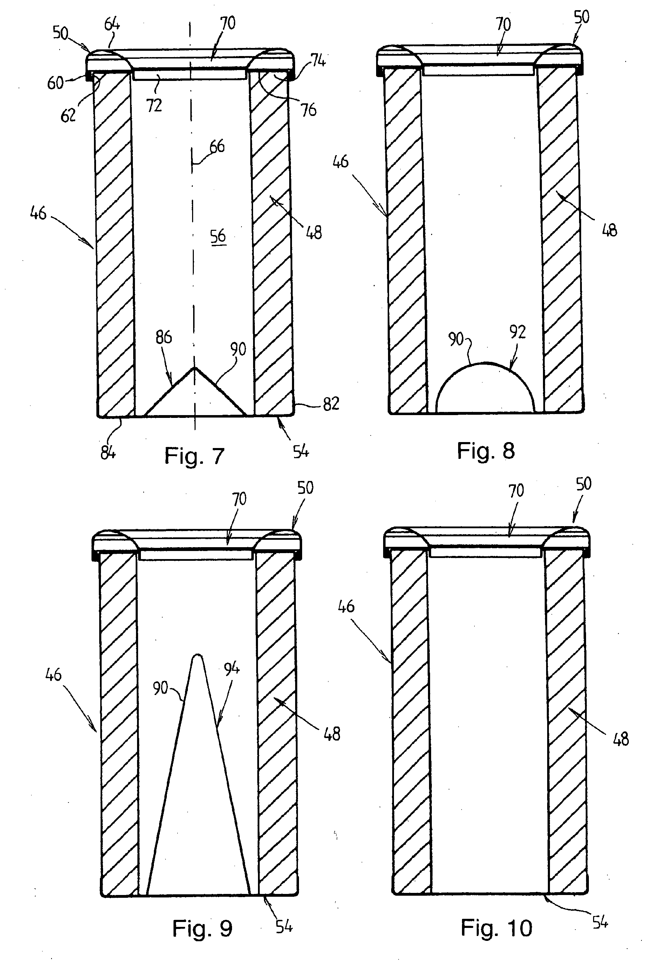

Das untere oder innere Ende der Einströmöffnung 70 wird von einem kurzen ringförmigen hohlzylindrischen Steg 72 begrenzt, der die dritte Teilfläche bildet. Der Steg 72 ragt ein wenig in den Innenraum 56 des Filterkörpers 48 und bildet die innere Begrenzung einer flachen Nut 74 auf der dem Filterkörper 48 zugewandten Seite des offenen Deckels 50 bzw. des Filterelements 52, in der das obere Stirnende des Filterkörpers 48 vergossen wird. Die obere Begrenzung 76 der Nut 74 wird vom Dichtungselement 52 gebildet, während die äußere Begrenzung der Nut 74 von einem über die Unterseite des Dichtungselements 52 überstehenden kurzen ringförmigen Steg 62 (Fig. 7) gebildet wird.

Alternativ können der Deckel 50 und das Dichtungselement 52 einstückig als integrales Bauteil hergestellt werden, wobei dann die Nut 74 nach oben zu von einem geschlossenen Boden des hohlen Vorsprungs 64 begrenzt wird, während ihre innere und äußere Begrenzung von kurzen ringförmigen Stegen gebildet wird, die nach unten über den geschlossenen Boden des hohlen Vorsprungs 64 überstehen.

An der Unterseite des Dichtungselements 52 befindet sich eine aus einem Schaumstoffmaterial bestehende ebene Dichtung (nicht dargestellt), die wie der Randflansch 60 einen quadratischen äußeren Umriss und eine kreisförmige innere Durchtrittsöffnung aufweist, deren Innendurchmesser etwas größer ist als der Außendurchmesser des Filterkörpers 48.

Der geschlossene Deckel 54 am unteren Ende des Filterkörpers 48 besteht ebenfalls aus einem thermoplastischen Kunststoff. Wie am besten in Fig. 6 dargestellt, umfasst der einstückig ausgebildete Deckel 54 einen zum Filterkörper 48 hin überstehenden hohlzylindrischen äußeren Umfangsrand 82 mit einem dem Außendurchmesser des Filterkörpers 48 entsprechenden Innendurchmesser, einen nach innen an den Umfangsrand 82 angrenzenden ringförmigen ebenen Bodenteil 84, der eine Anlagefläche für das mit dem Deckel 54 vergossene untere Stirnende des Filterkörpers 48 bildet, sowie einen mittigen, in Richtung der Einströmöffnung 70 verjüngten kegelförmigen Vorsprung 86, der ein Stück weit in den Innenraum 56 des Filterkörpers 48 ragt.

Der kegelförmige Vorsprung 86 weist an seiner Innenseite eine der Einströmöffnung 70 zugewandte Anströmfläche 90 auf, die unter einem Winkel von etwa 45 Grad gegenüber dem ringförmigen ebenen Bodenteil 84 und auch in Bezug zur Längsmittelachse 66 geneigt und symmetrisch zur Längsmittelachse 66 ist. Der Durchmesser am Fuß des kegelförmigen Vorsprungs 86 ist etwas kleiner als der Innendurchmesser des Filterkörpers 48, so dass ein Teil der einströmenden Luft am Vorsprung 86 entlang bis zum unteren Ende des Filterkörpers 48 gelangen kann. Die Spitze des kegelförmigen Vorsprungs 86 kann leicht gerundet sein, wie in Fig. 7 dargestellt. Die Höhe des Vorsprungs 86 beträgt etwa ein Sechstel bis ein Siebentel der Länge des Filterkörpers 48.

Die Wanddicke des geschlossenen Deckels 54 ist über dessen gesamten Durchmesser gleich, so dass der geschlossene Deckel 54 an der Außen- oder Unterseite der Filterpatrone 46 eine dem Vorsprung 86 entsprechende kegelförmige Vertiefung (nicht sichtbar) besitzt.

Im Unterschied zu der Filterpatrone 46 in den Figuren 4 bis 7 besitzt bei der Filterpatrone 46 in Fig. 8 der in den Innenraum 56 überstehende Vorsprung 92 die Form einer Halbkugel, deren Pol der Einströmöffnung 70 zugewandt ist und deren Äquator an den ringförmigen ebenen Bodenteil 84 angrenzt. Die Höhe des Vorsprungs 92 und der Durchmesser an dessen Fuß entsprechen denjenigen des Vorsprungs 86 aus den Figuren 6 und 7.

Bei der Filterpatrone in Fig. 9 ist der Vorsprung 94 wie bei der Filterpatrone 46 in Fig. 7 kegelförmig, ragt jedoch erheblich weiter in den Innenraum 56, wobei seine Höhe etwa sieben Zehntel der Länge des Filterkörpers 48 entspricht. Die Neigung der Anströmfläche 90 an der Innenseite des Vorsprungs 94 ist daher steiler als bei der Filterpatrone 46 in Fig. 7, wobei der Neigungswinkel gegenüber dem ringförmigen ebenen Bodenteil 84 etwa 80 Grad beträgt. Die Spitze des Vorsprungs 94 ist leicht konvex gerundet.

Bei der Filterpatrone 46 in Fig. 10 weist der geschlossene Deckel 54 keinen nach innen überstehenden Vorsprung auf, sondern ist eben und senkrecht zur Längsmittelachse 66 der Filterpatrone 46 ausgerichtet.

Bei den Filterpatronen 46 in den Figuren 8 bis 10 weist der offene Deckel 50 jeweils dieselbe düsenartige Einströmöffnung 70 wie bei der Filterpatrone 46 in den Figuren 4 bis 7 auf.

Bei Strömungs- und Druckmessungen an den in der Zeichnung dargestellten Filterpatronen 46 konnte im Vergleich zu einer Filterpatrone mit einem flachen offenen Deckel und einem ebenen zur Längsmittelachse senkrechten geschlossenen Deckel gemäß der EP 1 312 871 B1 die Strömungsmenge der durch den Filterkörper 48 strömenden Luft ohne Veränderungen am Filtermaterial bei den Filterpatronen 46 in Fig. 7 und 8 jeweils um etwa 15 % und bei den Filterpatronen 46 in Fig. 9 und 10 jeweils um etwa 5 bis 6 % vergrößert werden.

Bei Strömungs- und Druckmessungen an den beiden in Fig. 9 und 10 dargestellten Filterpatronen 46 konnte im Vergleich zu einer Filterpatrone gemäß der EP 1 312 871 B1 die Druckdifferenz zwischen der Einströmseite 36 und der Ausströmseite 38 ohne Veränderungen am Filtermaterial jeweils um etwa 5 % verkleinert werden.

Während bei einer von Luft durchströmten Filterpatrone gemäß der EP 1 312 871 B1 im Innenraum des Filterkörpers mit Hilfe von kleinen, zuvor in die Filterpatrone eingebrachten Kugeln aus Polystyrol extreme Turbulenzen in Form einer starken Verwirbelung der Polystyrolkugeln und sogar gelegentlich ein Austritt von einzelnen Polystyrolkugeln aus der Filterpatrone beobachtet wurden, nahmen die Turbulenzen bereits bei der Filterpatrone 46 aus Fig. 10 deutlich ab. Die Polystyrolkugeln wurden dort lediglich noch im unteren Drittel der Filterpatrone 46 verwirbelt. Ein Austritt von Polystyrolkugeln aus der Filterpatrone 46 konnte dort nicht mehr beobachtet werden. Bei den Filterpatronen 46 in den Figuren 7 bis 9 wurde keinerlei Verwirbelung der Polystyrolkugeln mehr beobachtet.

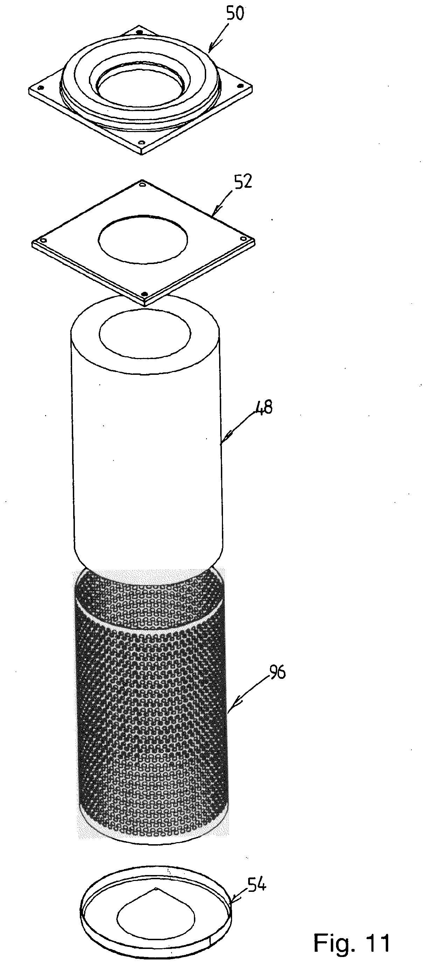

Um eine Beschädigung des zickzackförmig gefalteten und zu einem Hohlzylinder geformten Filtermaterials des Filterkörpers 48 bei der Handhabung der Filterpatrone 46 zu verhindern, ist die in Fig. 11 dargestellte Filterpatrone 46 zusätzlich mit einem als Lochzylinder ausgebildeten luftdurchlässigen Griffschutz 96 versehen, der den Filterkörper 48 in einem geringen Abstand von dessen äußerem Umfang umgibt. Die entgegengesetzten Enden des Griffschutzes 96 sind zusammen mit dem jeweils benachbarten Stirnende des Filterkörpers 48 in der Nut 74 des Deckels 50 bzw. im Deckel 54 vergossen und dadurch fest mit den beiden Deckeln 50, 54 verbunden. Der Griffschutz 96 besteht zweckmäßig aus einem dünnwandigen thermoplastischen Kunststoff, kann jedoch auch aus einem dünnen Metallblech bestehen.

## Patentansprüche

1. Filterpatrone (46) für eine Sicherheitswerkbank (10), mit einem hohlzylindrischen Filterkörper (48) aus einem Filtermaterial, der einen Innenraum (56) in radialer Richtung umgibt, einem an einem Ende des Filterkörpers (48) befestigten offenen Deckel (50), der eine in den Innenraum (56) mündende Einströmöffnung (70) umgibt, und einem am entgegengesetzten Ende des Filterkörpers (48) angeordneten geschlossenen Deckel (54), wobei am geschlossenen Deckel (54) ein zur Einströmöffnung (70) hin verjüngter Vorsprung (86; 92; 94) in den Innenraum (56) übersteht, der eine der Einströmöffnung (70) zugewandte, zu einer Längsmittelachse (66) der Filterpatrone (46) koaxiale rotationssymmetrische Anströmfläche (90) aufweist, **dadurch gekennzeichnet, dass** der Vorsprung (86; 92; 94) die Form eines Kegels mit einer Spitze oder einer leicht gerundeten Spitze oder die Form einer Halbkugel besitzt.

2. Filterpatrone nach Anspruch 1, **dadurch gekennzeichnet, dass** die Einströmöffnung (70) einen in Richtung des Innenraums (56) abnehmenden, düsenartigen Strömungsquerschnitt aufweist.

3. Filterpatrone nach Anspruch 2, **dadurch gekennzeichnet, dass** der abnehmende Strömungsquerschnitt der Einströmöffnung (70) außerhalb des Filterkörpers (48) angeordnet ist.

4. Filterpatrone nach Anspruch 1, 2 oder 3, **dadurch gekennzeichnet, dass** die Einströmöffnung (70) eine zu einer Längsmittelachse (66) der Filterpatrone (46) koaxiale rotationssymmetrische Begrenzungsfläche aufweist, deren Neigungswinkel in Strömungsrichtung der Luft durch die Einströmöffnung (70) zunimmt.

5. Filterpatrone nach einem der vorangehenden Ansprüche, **dadurch gekennzeichnet, dass** der offene Deckel (50) einstückig oder mehrteilig aus einem thermoplastischen Kunststoff ausgebildet ist.

6. Filterpatrone einem der vorangehenden Ansprüche, **dadurch gekennzeichnet, dass** der offene Deckel (50) einen über den äußeren Umfang des Filterkörpers (48) überstehenden Randflansch (60) und einen die Einströmöffnung (70) umgebenden ringförmigen Vorsprung (64) aufweist, der axial über die vom Filterkörper (48) abgewandte Seite des Randflanschs (60) übersteht.

7. Filterpatrone nach Anspruch 6, **dadurch gekennzeichnet, dass** der ringförmige Vorsprung (64) hohl ist.

8. Filterpatrone nach einem der vorangehenden Ansprüche, **dadurch gekennzeichnet, dass** die Einströmöffnung (70) an ihrem inneren Ende von einem hohlzylindrischen Steg (72) begrenzt wird, der ein wenig ins Innere des Filterkörpers (48) ragt und eine zum Filterkörper (48) hin offene flache Nut (74) begrenzt, in der das benachbarte Stirnende des Filterkörpers (48) vergossen ist.

9. Filterpatrone nach einem der vorangehenden Ansprüche, **dadurch gekennzeichnet, dass** das Verhältnis zwischen dem kleinsten Strömungsquerschnitt an einem inneren Ende der Einströmöffnung (70) und dem größten Strömungsquerschnitt an einem äußeren Ende der Einströmöffnung (70) kleiner als 0,75 und vorzugsweise kleiner als 0,5 ist.

10. Filterpatrone nach einem der vorangehenden Ansprüche, **dadurch gekennzeichnet, dass** der Außendurchmesser der Anströmfläche (90) an einem von der Einströmöffnung (70) abgewandten Fuß des Vorsprungs (86; 92; 94) etwas kleiner als der Innendurchmesser des Filterkörpers (48) ist.

11. Filterpatrone nach einem der vorangehenden Ansprüche, **dadurch gekennzeichnet, dass** die Höhe des Vorsprungs (86; 92) weniger als ein Viertel der axialen Länge des Filterkörpers (48) beträgt.

12. Filterpatrone nach einem der vorangehenden Ansprüche, **gekennzeichnet durch** einen den Filterkörper (48) umgebenden luftdurchlässigen Griffschutz (96).

13. Sicherheitswerkbank mit mindestens einer Filterpatrone (46) nach einem der vorangehenden Ansprüche.

## Claims

1. A filter cartridge (46) for a safety cabinet (10), comprising a hollow cylindrical filter body (48) made of a filter material, which surrounds an interior space (56) in the radial direction, an open cover (50) attached to one end of the filter body (48), which surrounds an inflow opening (70) opening into the interior space (56), and a closed cover (54) arranged at the opposite end of the filter body (48), wherein a projection (86; 92; 94) on the closed cover (54) tapering towards the inflow opening (70) protrudes into the interior space (56), said projection having an inflow surface (90) facing the inflow opening (70) and being rotationally symmetrical and coaxial with a longitudinal central axis (66) of the filter cartridge (46), **characterized in that** the projection (86; 92; 94) has the shape of a cone with a tip or a slightly rounded tip or the shape of a hemisphere.

2. The filter cartridge according to claim 1, **characterized in that** the inflow opening (70) has a nozzle-like flow cross-section which decreases in the direction of the interior space (56).

3. The filter cartridge according to claim 2, **characterized in that** the decreasing flow cross-section of the inlet opening (70) is arranged outside the filter body (48).

4. The filter cartridge according to claim 1, 2 or 3, **characterized in that** the inlet opening (70) has a boundary surface, which is rotationally symmetrical and coaxial with a longitudinal central axis (66) of the filter cartridge (46) and whose angle of inclination increases in the flow direction of the air through the inlet opening (70).

5. The filter cartridge according to one of the preceding claims, **characterized in that** the open cover (50) is formed in one or more parts from a thermoplastic synthetic material.

6. The filter cartridge according to one of the preceding claims, **characterized in that** the open cover (50) has an edge flange (60) projecting beyond the outer circumference of the filter body (48) and an annular projection (64) surrounding the inflow opening (70) and projecting axially beyond the side of the edge flange (60) that is facing away from the filter body (48).

7. Th filter cartridge according to claim 6, **characterized in that** the annular projection (64) is hollow.

8. The filter cartridge according to one of the preceding claims, **characterized in that** the inflow opening (70) is defined at its inner end by a hollow cylindrical web (72) which projects slightly into the interior of the filter body (48) and defines a flat groove (74) which is open towards the filter body (48) and in which the adjacent front end of the filter body (48) is cast.

9. The filter cartridge according to one of the preceding claims, **characterized in that** the ratio between the smallest flow cross-section at an inner end of the inflow opening (70) and the largest flow cross-section at an outer end of the inflow opening (70) is less than 0.75 and preferably less than 0.5.

10. The filter cartridge according to one of the preceding claims, **characterized in that** the outer diameter of the inflow surface (90) at a foot of the projection (86; 92; 94) facing away from the inflow opening (70) is slightly smaller than the inner diameter of the filter body (48).

11. The filter cartridge according to one of the preceding claims, **characterized in that** the height of the projection (86; 92) is less than a quarter of the axial length of the filter body (48).

12. The filter cartridge according to one of the preceding claims, **characterized by** an air-permeable grip protection (96) surrounding the filter body (48).

13. Safety cabinet with at least one filter cartridge (46) according to one of the preceding claims.

## Revendications

1. Cartouche filtrante (46) pour une hotte de sécurité (10), avec un corps de filtre cylindrique creux (48) en un matériau filtrant, qui entoure un espace intérieur (56) dans le sens radial, un couvercle ouvert (50) fixé à une extrémité du corps de filtre (48) et entourant une ouverture d'entrée (70) débouchant à dans l'espace intérieur (56), et un couvercle fermé (54) disposé à l'extrémité opposée du corps de filtre (48), dans lequel une saillie (86 ; 92 ; 94) effilée vers l'ouverture d'entrée (70) est prévue, au niveau du couvercle fermé (54), faisant saillie dans l'espace l'intérieur (56), et présentant une surface d'arrivée (90), tournée vers l'ouverture d'entrée (70), à symétrie de révolution et coaxiale à un axe central longitudinal (66) de la cartouche filtrante (46), **caractérisé en ce que** la saillie (86 ; 92 ; 94) a la forme d'un cône avec une pointe ou une pointe légèrement arrondie ou la forme d'un hémisphère.

2. Cartouche filtrante selon la revendication 1, **caractérisée en ce que** l'ouverture d'entrée (70) présente une section d'écoulement en forme de buse qui diminue en direction de l'intérieur (56).

3. Cartouche filtrante selon la revendication 2, **caractérisée en ce que** la section d'écoulement décroissante de l'ouverture d'entrée (70) est disposée à l'extérieur du corps du filtre (48).

4. Cartouche filtrante selon la revendication 1, 2 ou 3, **caractérisée en ce que** l'ouverture d'entrée (70) présente une surface limite à symétrie de révolution, coaxiale à un axe central longitudinal (66) de la cartouche filtrante (46) et dont l'angle d'inclinaison augmente dans la direction d'écoulement de l'air à travers l'ouverture d'entrée (70).

5. Cartouche filtrante selon l'une des revendications précédentes, **caractérisée en ce que** le couvercle ouvert (50) est formé en une ou plusieurs parties d'un matériau synthétique thermoplastique.

6. Cartouche filtrante selon l'une des revendications précédentes, **caractérisée en ce que** le couvercle ouvert (50) comporte une bride périphérique (60) faisant saillie au-delà de la périphérie extérieure du corps de filtre (48) et une saillie annulaire (64) entourant l'ouverture d'entrée (70) et faisant saillie axialement au-delà du côté de la bride périphérique (60) détourné du corps de filtre (48).

7. Cartouche filtrante selon la revendication 6, **caractérisée en ce que** la saillie annulaire (64) est creuse.

8. Cartouche filtrante selon l'une des revendications précédentes, **caractérisée en ce que** l'ouverture d'entrée (70) est délimitée à son extrémité intérieure par une âme cylindrique creuse (72) qui fait légèrement saillie à l'intérieur du corps de filtre (48) et délimite une rainure plate (74) qui est ouverte vers le corps de filtre (48) et dans laquelle est coulée l'extrémité frontale adjacente du corps de filtre (48).

9. Cartouche filtrante selon l'une des revendications précédentes, **caractérisée en ce que** le rapport entre la plus petite section d'écoulement à une extrémité intérieure de l'ouverture d'entrée (70) et la plus grande section d'écoulement à une extrémité extérieure de l'ouverture d'entrée (70) est inférieur à 0,75 et de préférence inférieur à 0,5.

10. Cartouche filtrante selon l'une des revendications précédentes, **caractérisée en ce que** le diamètre extérieur de la surface d'arrivée (90) à un pied de la saillie (86 ; 92 ; 94) opposé à l'ouverture d'entrée (70) est légèrement plus petit que le diamètre intérieur du corps du filtre (48).

11. Cartouche filtrante selon l'une des revendications précédentes, **caractérisée en ce que** la hauteur de la saillie (86 ; 92) est inférieure à un quart de la longueur axiale du corps du filtre (48).

12. Cartouche filtrante selon l'une des revendications précédentes, **caractérisée par** une protection de poignée perméable à l'air (96) entourant le corps du filtre (48).

13. Hotte de sécurité avec au moins une cartouche filtrante (46) selon l'une des revendications précédentes.
